# EUROPÄISCHE PATENTSCHRIFT

(11) **EP 1 694 982 B1**
(45) Veröffentlichungstag und Bekanntmachung des Hinweises auf die Patenterteilung: **17.06.2009**
(21) Anmeldenummer: 04816252.3
(22) Anmeldetag: 09.12.2004
(51) Int. Cl.: F16F 13/14, F16F 13/28

(54) **SCHALTBARES HYDRAULISCH DÄMPFENDES BUCHSENLAGER**
SWITCHABLE HYDRAULICALLY DAMPING BUSH BEARING
COUSSINET COMMANDABLE, ASSURANT UN AMORTISSEMENT HYDRAULIQUE

(30) Priorität: 16.12.2003 DE 10359343
(43) Veröffentlichungstag der Anmeldung: 30.08.2006
(73) Patentinhaber: ZF Friedrichshafen AG, 88038 Friedrichshafen (DE)
(72) Erfinder: SIEMER, Hubert, 49413 Dinklage (DE); BURWINKEL, Josef, 49413 Dinklage (DE); LOHEIDE, Stefan, 49134 Wallenhorst (DE); MEYER, Burkhard, 49413 Dinklage (DE)
(86) Internationale Anmeldenummer: PCT/DE2004/002697
(87) Internationale Veröffentlichungsnummer: WO 2005/059399

(56) Entgegenhaltungen:
- EP-A- 0 452 169
- US-A- 5 139 241
- US-A1- 2002 020 950

## Beschreibung

Die Erfindung betrifft ein hydraulisch dämpfendes Buchsenlager, ein sogenanntes Hydrolager, bei welchem der Hydraulikbereich aus zumindest zwei Kammerpaaren gebildet ist, wobei jedes Kammerpaar aus zumindest zwei getrennten Kammern gebildet wird, welche jeweils über zumindest einen Dämpfungskanal miteinander verbunden sind.

Zur Dämpfung von Schwingungen und zur Aufnahme von Kräften werden Lager unterschiedlichster Bauformen, vornehmlich Gummilager vielfältig eingesetzt. Im Fahrzeugbau dienen sie beispielsweise zur Lagerung von Teilen der Radaufhängung oder der Antriebsaggregate der Fahrzeuge. Dabei ist es bekannt, je nach Einsatzfall die dämpfende Wirkung elastomerer Dämpfungsglieder durch eine hydraulische Dämpfung zusätzlich zu unterstützen. Zur Nutzung des von der Flüssigkeitsmasse hervorgerufenen Tilgereffektes werden in den elastomeren Einsatzteilen beziehungsweise Gummikörpern der Lager Kammern zur Aufnahme eines fluiden Dämpfungsmittels vorgesehen. Die Kammern, deren Größe und Position im Lager von der geforderten Abstimmung abhängt, werden durch einen oder mehrere, in speziellen zusätzlich in das Lager integrierten Formteilen ausgebildete Kanäle strömungsleitend miteinander verbunden. Je nach Beanspruchung des Lagers wird so das Dämpfungsmittel von einer Kammer in eine andere gedrückt. Hierbei sind sowohl Lager bekannt, bei denen die hydraulische Dämpfung in Bezug auf radial in das Lager eingetragene Kräfte genutzt wird als auch solche, bei denen vornehmlich die axiale Dämpfung durch die Dämpfungsflüssigkeit unterstützt wird. Auch Lager bei denen der Tilgereffekt des Dämpfungsmittels in axialer und radialer Richtung genutzt wird sind bekannt.

Ein derartiges Lager ist aus der DE 691 01 803 T2 bekannt, wobei dort zwischen einem Innenteil und einer Außenhülse ein elastomeres Dämpfungsglied angeordnet ist. Innerhalb des elastomeren Dämpfungsgliedes ist ein erstes mit einem Fluid gefülltes Kammerpaar angeordnet, wobei sich die beiden dazugehörigen Kammern an den entgegengesetzten Enden des Lagers befinden und eine frequenzabhängige Dämpfung in axialer Richtung des Lagers. Zwischen diesem ersten Kammerpaar ist im elastomeren Dämpfungsglied ein zweites Kammerpaar, mit sich radial gegenüberstehenden Kammern, angeordnet, welches für die radiale Dämpfung vorgesehen ist. Über in einem im inneren des Innenteils vorgesehenen Kanalträger angeordnete Dämpfungskanäle sind die axial wirkenden und die radial wirkendenden Kammern miteinander verbunden. Wesentlicher Nachteil an dieser Ausführung ist die Anordnung des Kanalträgers im Inneren des Innenteils, wodurch die Dämpfungskanäle, und damit die Dämpfungscharakteristik nur in einem sehr geringen Maße variiert werden können. Die Kammern der jeweiligen Kammerpaare als auch die Kammer des ersten und des zweiten Kammerpaares zueinander sind zudem räumlich weit voneinander getrennt angeordnet.

Weiterhin sind hydraulisch dämpfende Lager mit zwei in einer Richtung wirkenden Kammern bekannt, bei denen die beiden mit hydraulischem Fluid gefüllten Kammern zur abhängig vom Betriebszustand ab- oder zuschaltbaren Dämpfung bzw. Steifigkeit neben der Verbindung über einen Dämpfungskanal über einen verschließ- und freigebbaren Kammerwanddurchbruch unmittelbar verbindbar sind. Ein derartiges Lager ist beispielsweise aus der EP 0 173 273 A2 bekannt, bei der ein Kammerwanddurchbruch durch eine pneumatisch angetriebene Verschlußplatte verschlossen werden kann. Der Pneumatikzylinder als Betätigungszylinder ist dabei außerhalb der Kammern angeordnet und erhöht den Bauraum des Lagers in beträchtlichem Maße. Zudem ist ein zusätzlicher Dichtaufwand am Kolben des Pneumatikzylinders erforderlich, wobei diese recht aufwendige Anordnung auf ein Zweikammerlager beschränkt ist.

Aufgabe der Erfindung ist es, ein hydraulisch dämpfendes Lager mit einer Dämpfung sowohl in axialer als auch radialer Richtung dahingehend weiterzuentwickeln, dass auch eine abhängig vom Betriebszustand ab- oder zuschaltbare Dämpfung bzw. Steifigkeit ermöglicht wird, wobei das Lager einfach und kompakt gestaltet und wirtschaftlich herzustellen sein soll.

Die Aufgabe wird erfindungsgemäß durch ein Buchsenlager mit den Merkmalen nach Anspruch 1 gelöst. Vorteilhafte Aus- bzw. Weiterbildungen des Buchsenlagers sind in den Unteransprüchen angeben.

Das erfindungsgemäße Buchsenlager weist ein Innenteil mit einer entlang einer Längsachse verlaufenden Bohrung auf, wobei das Innenteil von einer Außenhülse umgeben wird und zwischen dem Innenteil und der Außenhülse zumindest ein elastomeres Dämpfungsglied vorhanden ist. Weiterhin besteht das Buchsenlager aus zumindest einem ersten und einem zweiten Kammerpaar, wobei jedes Kammerpaar aus zwei getrennten Kammern gebildet wird. Die Kammern des ersten Kammerpaares sind axial entlang der Längsachse des Buchsenlagers angeordnet und die zwei Kammern des zweiten Kammerpaares sind radial zur Längsachse sowie in axialer Richtung zwischen den zwei Kammern des ersten Kammerpaares angeordnet. Die Kammerpaare sind dabei jeweils über zumindest einem Dämpfungskanal, welcher in einem zwischen der Außenhülse und einer außenliegenden Außenbuchse angeordneten Kanalträger vorgesehen ist, verbunden. Erfindungsgemäß ist zumindest eine der Kammern des einem Kammerpaares mit zumindest einer der Kammern des zweiten Kammerpaares über zumindest einen wahlweise verschließbaren Kammerwanddurchbruch verbindbar oder es sind die Kammern zumindest eines der Kammerpaare über zumindest einen wahlweise verschließbaren Kammerwanddurchbruch verbindbar oder es sind zumindest eine der Kammern des einen Kammerpaares mit zumindest einer der Kammern des zweiten Kammerpaares über zumindest einen wahlweise verschließbaren Kammerwanddurchbruch verbindbar und die Kammern zumindest eines der Kammerpaare über zumindest einen weiteren wahlweise verschließbaren Kammerwanddurchbruch verbindbar.

Durch das wahlweise unmittelbare Verbinden der Kammern aller Kammern untereinander ist nun die Möglichkeit geschaffen, eine abhängig vom Betriebszustand ab- oder zuschaltbare Dämpfung bzw. Steifigkeit in wenigstens zwei Raumrichtungen zu realisieren. Sofern nur die Kammern eines Kammerpaares untereinander durch einen Kammerwanddurchbruch unmittelbar verbunden werden, werden lediglich die hochfrequenten Schwingungen in einer Raumrichtung isoliert, wohingegen in der anderen Raumrichtung weiterhin eine Dämpfungswirkung vorhanden ist. Somit ist durch die wahlweise schaltbaren verschiedenen Verbindungsmöglichkeiten der Kammern eine Schaltbarkeit des Buchsenlagers geschaffen, so dass die Schaltbarkeit eine Abstimmung des Lagers auf unterschiedliche Fahrzustände ermöglicht.

Die Kammerwanddurchbrüche werden vorteilhafterweise jeweils mit einem Schließmechanismus, welcher jeweils wenigstens aus einem Verschlußelement und einer Betätigungsvorrichtung gebildet ist, wahlweise verschlossen oder geöffnet. Bevorzugt ist das Verschlußelement als ein Schieber ausgebildet, der von einer vorteilhaft als Elektromagnet ausgebildeten Betätigungsvorrichtung betätigt wird. Neben der Ausbildung als Elektromagnet kann die Betätigungsvorrichtung auch pneumatisch, hydraulisch oder mechanisch, beispielsweise über ein Zugseil betätigt werden. Zur Anpassung des Dämpfungs- bzw. Steifigkeitsverhaltens des Buchsenlagers in einer oder in wenigstens zwei Raumrichtungen an die verschiedenen Betriebzustände, können die Betätigungsvorrichtungen einzeln, paarweise oder auch in Gruppen angesteuert werden. Hierdurch ist es möglich, zum einen verschiedenste Kammern der einzelnen Kammerpaare miteinander zu verbinden und zum anderen die Querschnittsöffnungen der Kammerwanddurchbrüche für zwei miteinander verbundene Kammern für eine weitere variable Abstimmung der Dämpfungseigenschaften zu variieren. So können beispielsweise zwei Kammern über zwei benachbarte und getrennt ansteuerbare Kammerwanddurchbrüche verbindbar sein. In einer bevorzugten Ausführungsform kann eine Betätigungsvorrichtung auch zwei Schieber gleichzeitig betätigen, so dass insgesamt der Aufwand bei mehreren verschließbaren Kammerwanddurchbrüchen verringerbar ist.

Die Schieber als auch die elektromagnetische Betätigungsvorrichtung lassen sich auf sehr engem Raum unterbringen, so dass sie vorteilhaft für ein kompaktes Lager geschaffen werden kann. Besonders günstig wirkt sich dabei die Anordnung des Schließmechanismus, insbesondere der Betätigungsvorrichtung, innerhalb zumindest einer mit Fluid gefüllten Kammer aus, so dass außerhalb des Lagers angeordnete Bauteile vermieden werden können.

Gemäß einem weiteren Merkmal der Erfindung sind die Kammern des Buchsenlagers derart anbeordnet, dass die Kammern des ersten Kammerpaares und die Kammern des zweiten Kammerpaares sich in axialen Teilbereichen sich zumindest bereichsweise überdecken. Demgemäß sind innerhalb einem senkrecht zur Längsachse ausgerichteten Ring entlang einer konzentrisch zum Ring verlaufenden Kreislinie sowohl zumindest Teile von Kammern des ersten Kammerpaares als auch Kammern oder Teile der Kammern des zweiten Kammerpaares hintereinander angeordnet. Durch diese Anordnung kann das benötigte Volumen für die an den axialen Enden angeordneten Kammern in Bereiche zur Mitte des Buchsenlagers hin verlagert werden. Und zwar in genau diejenigen Bereiche, die üblicherweise durch ein Elastomer ausgefüllt werden. So wird mit der vorliegenden Erfindung zum einen ein sehr kompakt aufbauendes, Buchsenlager, insbesondere in axialer Richtung, realisiert und zum anderen werden großvolumige elastomere Bereiche vermieden. Auf diese Weise wird zudem der Materialeinsatz hinsichtlich des Elastomers wesentlich verringert, so dass der Kostenaufwand erheblich gesenkt werden kann. Durch die kompaktere Ausführung der Buchsenlager wird zudem die Möglichkeit geschaffen, in den Vulkanisationswerkzeugen eine größere Anzahl von Vulkanisationsnestern vorzusehen, so dass je Vulkanisationsvorgang eine größere Anzahl von Buchsenlagern erzeugt werden kann.

Zur Erzeugung eines Anschlages zur Begrenzung der radialen Auslenkung des Innenteils gegenüber der Außenhülse ist in einer vorteilhaften Ausbildung die Anordnung von Vorsprüngen am Innenteil des Buchsenlagers vorgesehen, wodurch zudem das Kammervolumen auf einfache Weise beeinflusst werden kann.

Die Außenhülse, welche das Innenteil und das Elastomere Dämpfungsglied umgibt, ist vorteilhafterweise zumindest in Teilbereichen zur Außenbuchse beziehungsweise zu einem zwischen Außenbuchse und Außenhülse angeordneten Kanalträger beabstandet, so dass der zwischen Außenhülse und Außenbuchse oder Außenhülse und Kanalträger vorhandene Raum als Volumen für die an den axialen Enden des Buchsenlagers angeordneten Kammern des ersten Kammerpaares verwendet werden kann. Diese Anordnung gestattet es damit, dass die Kammern des ersten und des zweiten Kammerpaares nicht nur in axialer Richtung unmittelbar, lediglich durch eine dünne Trennwand des elastomeren Dämpfungsgliedes getrennt, benachbart angeordnet sind, sondern auch in einer zur Längsachse parallelen Ebene unmittelbar benachbart angeordnet sein können. Getrennt sind die Kammern des ersten und des zweiten Kammerpaares dabei durch die feste Wand der Außenhülse sowie ggf. einer Schicht des elastomeren Dämpfungsgliedes. Zumindest eine Kammer des ersten Kammerpaares grenzt damit in einer geneigt zu einer senkrecht zur Längsachse liegenden Ebene unmittelbar an eine Kammer des zweiten Kammerpaares.

Zur Trennung der an den axialen Enden des Buchsenlagers angeordneten Kammern des ersten Kammerpaares kann die Außenhülse in einer bevorzugten Ausbildung mit einem Steg versehen sein, der die Außenhülse mit dem Kanalträger oder der Außenbuchse verbindet. Sofern der Kanalträger oder die Außenbuchse zylindrisch ausgebildet sind, ist der Steg in Form eines Kreissegmentes ausgebildet. Dieser Steg trennt die an den axialen Enden des Buchsenlagers angeordneten Kammern des ersten Kammerpaares. Somit sind auch die Kammern des ersten Kammerpaares unmittelbar zueinander benachbart angeordnet und lediglich durch einen Steg getrennt. Sie grenzen aneinander an.

Das Dämpfungsglied kann vorteilhafterweise zweiteilig ausgebildet werden, wobei die beiden Teile des. Dämpfungsgliedes in ihrer Kontaktbereich eine Trennebene ausbilden, die senkrecht zur Längsachse des Buchsenlagers ausgebildet ist. Durch diese Teilung des Dämpfungsgliedes kann vorteilhafterweise eine Vorspannung innerhalb des zweiteiligen Dämpfungsgliedes in axialer Richtung erreicht werden. Die Vorspannung wird dabei über die Außenhülse gehalten, wobei die Außenhülse hierzu in einer bevorzugten Ausbildung ebenfalls zweiteilig ausgeführt werden kann. Die beiden Teile der Außenhülse bilden dabei in ihrem Kontaktbereich eine Kontaktzone aus, die sich durch den gesamten Steg hindurch erstreckt. Der Steg ist somit auch zweiteilig ausgeführt. Die Kontaktzone der Außenhülse und die Trennebene der beiden Teile des Dämpfungsgliedes befinden sich in einer gemeinsamen Ebene. Durch die zweiteilige Ausbildung des Dämpfungsgliedes und der Außenhülse wird hinsichtlich verbesserter Montage- und Vulkanisationsbedingungen zudem eine vereinfachte Fertigung des Buchsenlagers erzielt.

In einer zweiten bevorzugten Ausführungsform kann der die Außenhülse mit der Außenbuchse oder dem Kanalträger verbindenden Steg als sein Zusatzelement ausgebildet sein, welches beispielsweise mittels einer Verschraubung an der Außenhülse befestigt wird. Hierzu ist an dem Zusatzelement senkrecht zum Steg eine Befestigungsplatte mit Bohrungen angeordnet, wobei diese beispielsweise einstückig mit dem Steg ausgebildet sein kann. Mittels diesem Zusatzelement kann die Herstellung des Buchsenlagers weiter vereinfacht werden und zudem eine Vorspannung der beiden Teile des elastomeren Dämpfungsgliedes vorteilhafterweise gezielt aufgebracht und dauerhaft gehalten werden.

Der Kanalträger, in welchem die die Kammern verbindenden Dämpfungskanäle ausgebildet sind, ist besonders vorteilhaft zwischen Außenhülse und Außenbuchse angeordnet. Bedingt durch den relativ großen Durchmesser des Kanalträgers ist es möglich, die verschiedenen Dämpfungskanäle vielfach zu variieren, um so eine wesentlich größere Verschiebung des wirksamen Frequenzbandes zu erzielen. Die Frequenzlagen und die Beträge der Dämpfungsmaxima sind dabei mittels der getrennten Dämpfungskanale für das erste und das zweite Kammerpaar getrennt einstellbar. Wenn der Kanalträger sich in einer bevorzugten Ausbildung zudem über die gesamte axiale Ausdehnung der Außenbuchse erstreckt, wird zudem eine wirksame mechanische Unterstützung der Außenbuchse erzielt, da der Kanalträger einen Teil der wirkenden Kräfte aufnehmen kann. Auf diese Weise kann die Außenbuchse insgesamt für geringere Lasten ausgelegt werden.

Vorteilhaft für den Herstell- und Konstruktionsaufwand als auch für die Gebrauchseigenschaften kann es sein, wenn das Buchsenlager insgesamt wie auch die einzelnen Bauteile zueinander, insbesondere das Innenteil, die Teile der Außenhülse und die Teile des elastomeren Dämpfungsgliedes, symmetrisch ausgebildet werden. Insbesondere durch die symmetrische Ausbildung der Kammern der Kammerpaare kann beispielsweise ein in vorrangig in zwei Raumrichtungen abgestimmtes Dämpfungsverhalten erzielt werden. Die Symmetrie bezieht sich dabei auf zwei senkrecht zueinander stehende Ebenen, innerhalb derer sich die Längsachse des Buchsenlagers erstreckt, als auch auf eine Ebene senkrecht zur Längsachse des Buchsenlagers.

Der symmetrische Aufbau des Buchsenlagers begünstigt zudem die Fertigung einer Hydrolagerreihe gemäß einem Baukastensystem. So kann beispielsweise für eine Außenbuchse mit einem festen Außendurchmesser durch die Auswahl verschiedener innerer Bauteile, beispielsweise Kanalträger, Innenteil oder Außenhülse, eine Vielzahl von Buchsenlagern mit unterschiedlichen, an die jeweiligen Anforderungen angepaßten Dämpfungseigenschaften, geschaffen werden.

In einer weiteren vorteilhaften Ausbildung können zumindest das Zusatzelement zusammen mit dem Betätigungsvorrichtung und dem Verschlußelement als ein vormontiertes Modul ausgebildet sein, wodurch der Fertigungsaufwand sich weiter reduzieren läßt.

Weitere, die Erfindung verbessernde Maßnahmen sind in den Unteransprüchen angegeben oder werden nachstehend gemeinsam mit der Beschreibung eines bevorzugten Ausführungsbeispieles der Erfindung anhand der Figuren näher dargestellt. Es zeigt:
- Fig. 1:: das erfindungsgemäße Buchsenlager ohne Außenbuchse und Kanalträger in einer ersten Ausführungsform
- Fig. 2:: eine Schnittdarstellung entlang des Schnittlinie II - 11 in der Fig. 1

- Fig. 3:: eine Schnittdarstellung entlang der Schnittlinie III - III in der Fig. 1
- Fig. 4:: eine Schnittdarstellung entlang der Schnittlinie IV -IV in der Fig. 3
- Fig. 5:: das erfindungsgemäße Buchsenlager ohne Außenbuchse und Kanalträger in einer zweiten Ausführungsform
- Fig. 6:: eine Schnittdarstellung entlang des Schnittlinie VI - VI in der Fig. 5
- Fig. 7:: eine Schnittdarstellung entlang des Schnittlinie VII - VII in der Fig. 5
- Fig. 8:: eine Schnittdarstellung entlang des Schnittlinie VIII - VIII in der Fig. 7
- Fig. 9:: den Kanalträger als Einzelbauteil in einer dreidimensionalen Ansicht

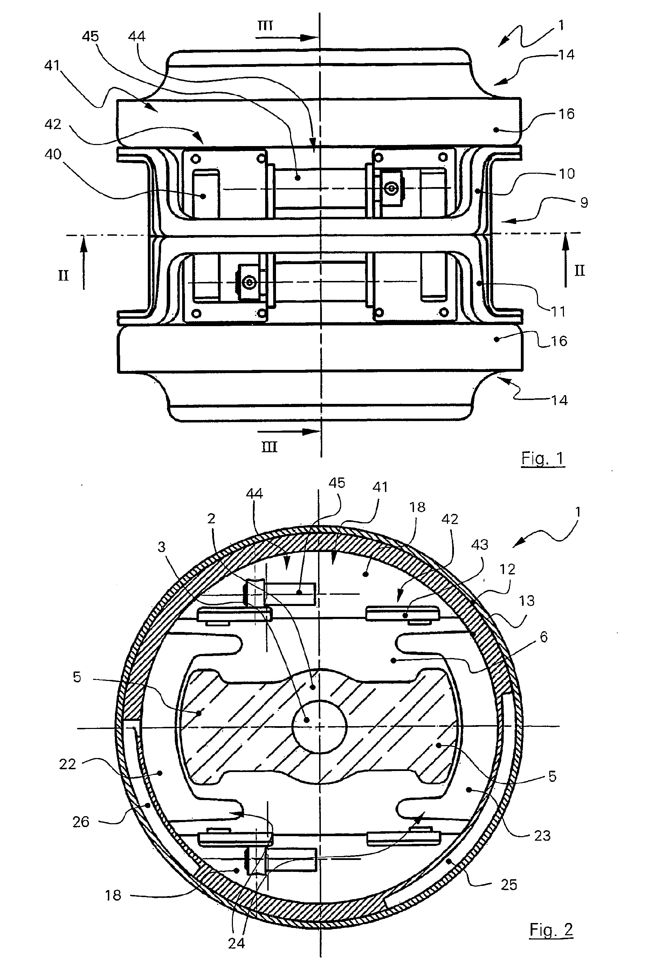

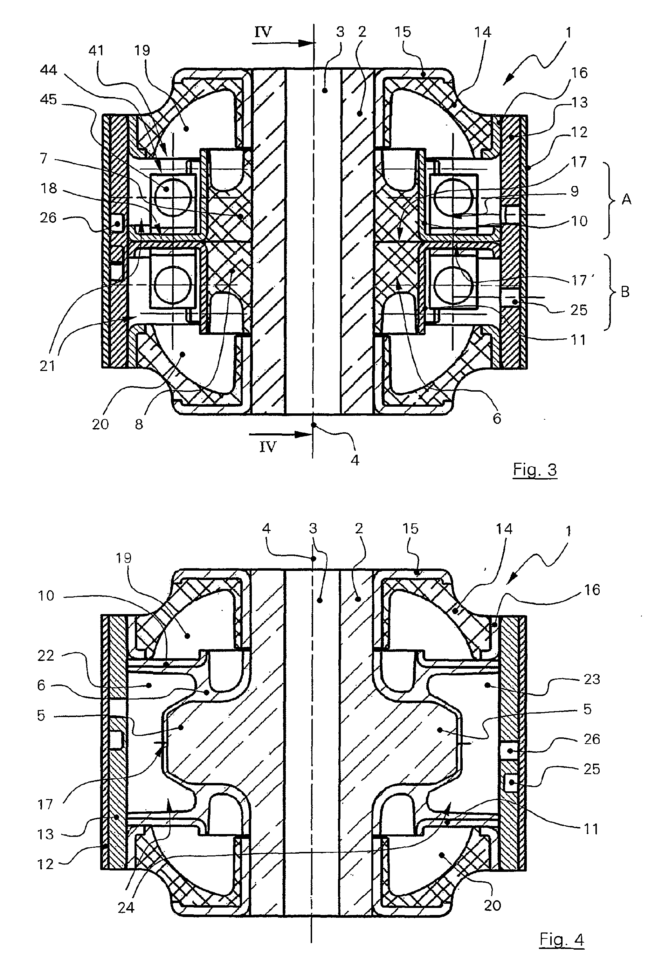

In den Fig. 1 bis 4 ist ein erstes Ausführungsbeispiel eines erfindungsgemäßen Buchsenlagers 1 dargestellt. Das Buchsenlager 1 besitzt ein vorzugsweise metallisches, beispielsweise aus Aluminium bestehendes, Innenteil 2 mit einer durchgehenden zylindrischen Bohrung 3 entlang der Längsachse 4 des Buchsenlager 1, wobei die Bohrung 3 auch jede andere Form, beispielweise ein Innensechskant, annehmen kann und beispielsweise als eine Sacklochbohrung ausgebildet sein kann. Das Innenteil 2 ist in einem mittleren Bereich des Buchsenlagers 1 mit zwei sich radial gegenüberliegenden und radial nach außen erstreckenden Vorsprüngen 5 versehen, wobei das Innenteil 2 von einem zweiteiligen elastomeren Dämpfungsglied 6 umgeben ist. Das aus einem oberen Dämpfungsteil 7 und einem unteren Dämpfungsteil 8 bestehende elastomere Dämpfungsglied 6 ist an das Innenteil 2 anvulkanisiert und stellt zwei Schub- oder Schubdruckpakete dar, welche innerhalb einer zweiteiligen Außenhülse 9 angeordnet und an diese ebenfalls anvulkanisiert sind, wobei das obere und das untere Außenhülsenteil 10, 11 die Dämpfungsteile 7, 8 zusammendrückt und eine Vorspannung auf das elastomere Dämpfungsglied 6 aufbringen. Die Außenhülse 9 wird von einer Außenbuchse 12 umgeben, wobei zwischen der Außenbuchse 12 und der Außenhülse 9 ein zylindrischer Kanalträger 13 angeordnet ist.

Auf das Innenteil 2 wird an den axialen Endbereichen jeweils ein konisches Gummilager 14 mittels eines inneren Stützringes 15 aufgepresst, wobei das Gummilager 14 mittels eines äußeren Stützringes 16 in die Außenbuchse 12 bzw. den Kanalträger 13 eingesetzt wird, beispielsweise über ein Presspassung.

Das obere und untere Dämpfungsteil bilden in ihrem Kontaktbereich eine Trennebene 17 aus, welche sich mit der Kontaktzone 17' des oberen und des unteren Außenhülsenteils 10, 11 in einer gemeinsamen Ebene befindet. In dem seitlichen Bereich der Vorsprünge 5 des Innenteils 2 weist die Außenhülse 9 einen Abstand zur Außenbuchse 12 bzw. den Kanalträger 13 auf. Etwa in der Mitte des Buchsenlagers 1 ist die Außenhülse 9 daher mit einem Steg 18 versehen, der die Verbindung der Außenhülse 9 zur Außenbuchse 12 bzw. den Kanalträger 13 darstellt. In einer Draufsicht stellt sich der Steg 18 als ein Kreissegment dar (Fig. 2). Der Steg 18 ist in diesem Ausführungsbeispiel wie die Außenhülse insgesamt auch zweiteilig ausgeführt, so dass sich die Kontaktzone 17' in den Steg 18 hinein fortsetzt.

Die an den axialen Enden angeordneten Gummilager 14 bilden zusammen mit dem elastomeren Dämpfungsglied 6 sowie der Außenhülse 9 und, als radiale Begrenzung, mit dem Kanalträger 13 bzw. der Außenbuchse 12 jeweils eine obere und eine untere Kammer 19, 20, welche ein erstes Kammerpaar 21 bilden, das im Bereich der Trennebene 17 durch den Steg 18 voneinander getrennt ist. Im radial äußeren Bereich der Vorsprünge 5 bilden Einformungen in das elastomere Dämpfungsglied 6 zusammen mit der Außenbuchse 12 bzw. dem Kanalträger 13 zwei radiale Kammern 22, 23 aus, die ein zweites Kammerpaar 24 bilden. Die Kammern 19, 20, 22 und 23 sind mit einem hydraulischen Fluid gefüllt.

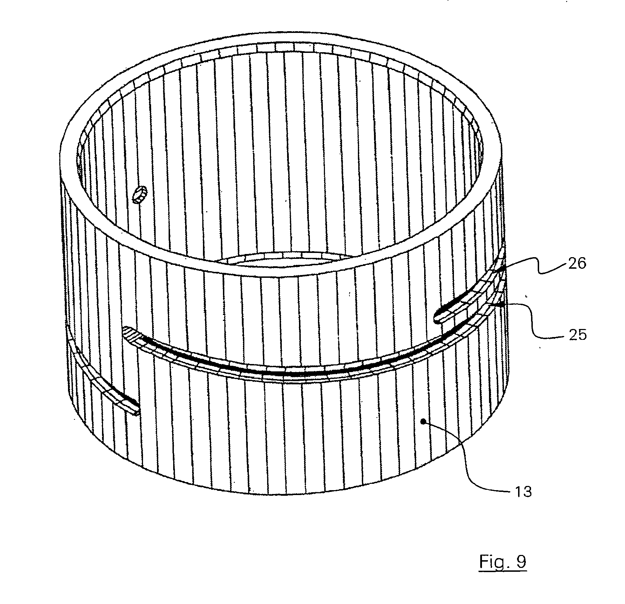

Die beiden Kammern 19, 20 des ersten Kammerpaares 21 sind über einen im Kanalträger 13 angeordneten ersten Dämpfungskanal 25 miteinander verbunden, und die zwei Kammern 22, 23 des zweiten Kammerpaars 24 sind über einen ebenfalls im Kanalträger 13 angeordneten zweiten Dämpfungskanal 26 miteinander verbunden (sieh auch Fig. 9). Das erste Kammerpaar 21 bildet somit eine Dämpfung des Buchsenlagers 1 axial zur Längsachse 4 aus, wohingegen das zweite Kammerpaar 24 eine radiale Dämpfungswirkung des Buchsenlagers 1 bewirkt. Die Anordnung der Dämpfungskanäle 25, 26 in einem radial äußeren Bereich des Buchsenlagers 1 ermöglicht eine große konstruktiv frei wählbare Variation des Dämpfungskanalvolumens zur Beeinflussung der Dämpfungseigenschaften des Buchsenlagers 1.

Der Kanalträger 13 erstreckt sich in der gezeigten Ausführung in axialer Richtung über die gesamte Länge der Außenbuchse 12. Zum einen werden dadurch die Möglichkeiten der Anordnung der Dämpfungskanäle erweitert und zum anderen unterstützt der Kanalträger 13 die Außenbuchse 12, da er einwirkende mechanische Lasten mit tragen kann. In einer weiterführenden Ausführung ist es durchaus denkbar, die Außenbuchse 12 und den Kanalträger 13 als ein gemeinsames Bauteil auszubilden. Alternativ kann der Kanalträger 13 auch radial außerhalb der Außenbuchse 12 angeordnet werden. Hierzu sind dann in der Außenbuchse 12 Durchstoßbohrungen für die Dämpfungskanäle 25, 26 vorzusehen.

Die radial wirkenden Kammern 22, 23 des zweiten Kammerpaares 24 sind nicht über den gesamten Umfang des Buchsenlagers 1 angeordnet, sondern lediglich in einen gewissen begrenzten Abschnitt. Außerhalb dieser Bereiche werden die radial wirkenden Kammern 22, 23 von den axial wirkenden Kammern 19, 20 umgriffen, so dass die Kammern 19, 20 des ersten Kammerpaares 21 und die Kammern 22, 23 des zweiten Kammerpaares 24 in zur Längsachse 4 axialen Teilbereichen A, B sich überdecken. Auf diese Weise wird zumindest ein Teil des Volumens der axial wirkenden Kammern 19, 20 in mittige Bereiche des Buchsenlagers 1 verlagert, wodurch ein sehr kompaktes Buchsenlager 1 entsteht. Unterstützt wird die kompakte Bauart dadurch, dass die axial wirkenden Kammern 19, 20 lediglich durch den Steg 18 voneinander getrennt angeordnet sind. Auch liegen die axial wirkenden Kammern 19, 20 entlang einer zur Längsachse 3 parallelen Ebene unmittelbar benachbart zu den radial wirkenden Kammern 22, 23, wobei diese Ebene in Bezug auf die Längsachse 3 auch durchaus geneigt sein kann. Die axial wirkenden Kammern 19,20 sind von den radial wirkenden Kammern 22, 23 lediglich durch einen Bereich der Außenhülse 9, bzw. einem Bereich des oberen oder unteren Außenhülsenteils 10, 11 sowie eine dünne Schicht des elastomeren Dämpfungsgliedes 6 voneinander getrennt.

In dem Bereich, wo die axial wirkenden Kammern 19, 20 unmittelbar benachbart zu den radial wirkenden Kammern 22, 23 angeordnet sind, sind in der Außenhülse 9 und dem elastomeren Dämpfungsglied 6 Kammerwanddurchbrüche 40 vorgesehen, welche von einem Schließmechanismus 41 wahlweise verschließbar sind. Der Schließmechanismus 41 besteht im wesentlichen aus einem Verschlußelement 42, welches in diesem Ausführungsbeispiel als Schieber 43 ausgebildet ist und einer Betätigungsvorrichtung 44. Die Betätigungsvorrichtung 44 ist hier als Elektromagnet 45 ausgebildet, kann aber beliebig anders ausgeführt sein. So ist beispielsweise auch ein pneumatisch, hydraulisch oder ein über einen Seilzug mechanisch betätigbares Verschlusselement 42 einsetzbar. Die Betätigungsvorrichtung 44 im gezeigten Ausführungsbeispiel betätigt jeweils zwei Schieber 43, wodurch wenig Bauraum benötigt wird. Insbesondere die Anordnung des gesamten Schließmechanismus 41, einschließlich der Betätigungsvorrichtung 44, innerhalb der jeweiligen Kammer 19 und 20 ergibt ein kompakt aufbauendens Buchsenlager 1, ohne störende nach außen ragende Bauteile. Auf Grund der Platzverhältnisse bietet sich im gezeigten Ausführungsbeispiel die Anordnung der Schließmechanismen 41 in den axial wirkenden Kammern 19 und 20 an. Grundsätzlich ist aber auch die Unterbringung des Schließmechanismus 41 in den radial wirkenden Kammern 23 und 24 oder eine Kombination der Anordnung möglich. Prinzipiell kann eine Betätigungsvorrichtung 44 ein oder beliebig viele Verschlusselemente 42 betätigen. Dies hängt im wesentlichen von der Anordnung der Kammerwanddurchbrüche 40 sowie der Platzverhältnisse im Lager allgemein ab.

Abhängig von den Fahrzuständen eines Kraftfahrzeuges können die Schließmechanismen 41 die Kammerwanddurchbrüche 40 wahlweise freigeben oder verschließen. Sind die Kammerwanddurchbrüche 40 durch die Schließmechanismen 41 verschlossen, kann das Fluid jeweils im Dämpfungskanal 25 bzw. 26 zwischen den Kammern 19, 20 des ersten Kammerpaares 21 und zwischen den Kammern 22, 23 des zweiten Kammerpaares 24 verschoben werden, so dass eine Dämpfungswirkung erzielt werden kann. Ist der Kammerwanddurchbruch 40 dagegen geöffnet, wird das Fluid direkt, ohne Umweg über den Dämpfungskanal 25 und/oder 26, zwischen den Kammern ausgetauscht. In diesem Fall ist die Dämpfungswirkung aufgehoben.

Im gezeigten Ausführungsbeispiel werden sämtliche Schließmechanismen 41 gleichzeitig über die zugeordnete Betätigungsvorrichtung 44 betätigt. Es ist aber auch möglich die Betätigungsvorrichtung 44 einzeln, paarweise oder in Gruppen anzusteuern, so dass ggf. nur die Dämpfungswirkung in einer Wirkrichtung aufgehoben wird, in der anderen Richtung aber bestehen bleibt. Wenn beispielweise am Steg 18 zwischen den axial wirkenden Kammern 19, 20 ein weiterer Schließmechanismus vorgesehen wird (nicht dargestellt), kann bei dessen separater Ansteuerung lediglich die Dämpfungswirkung in axialer Richtung aufgehoben werden, wohingegen die Dämpfungswirkung in radialer Richtung erhalten bleibt.

Die zweiteilige Ausführung der Außenhülse 9 ermöglicht neben der Aufbringung einer vorteilhaften Vorspannung auf das elastomere Dämpfungsglied 6 auch eine vereinfachte Fertigung wodurch sich der Herstellungsaufwand reduzieren läßt. Durch die Vorspannung auf das elastomere Dämpfungsglied 6 bzw. dem oberen und unteren Dämpfungsteil 7, 8 läßt sich beispielsweise die durch den Vulkanisierungsvorgang eingebrachte Schrumpfspannung reduzieren. Wie aus den Figuren zu erkennen ist, beansprucht das elastomere Dämpfungsglied 6 lediglich ein geringes Volumen, wodurch ein verringerter Materialeinsatz erzielt werden kann.

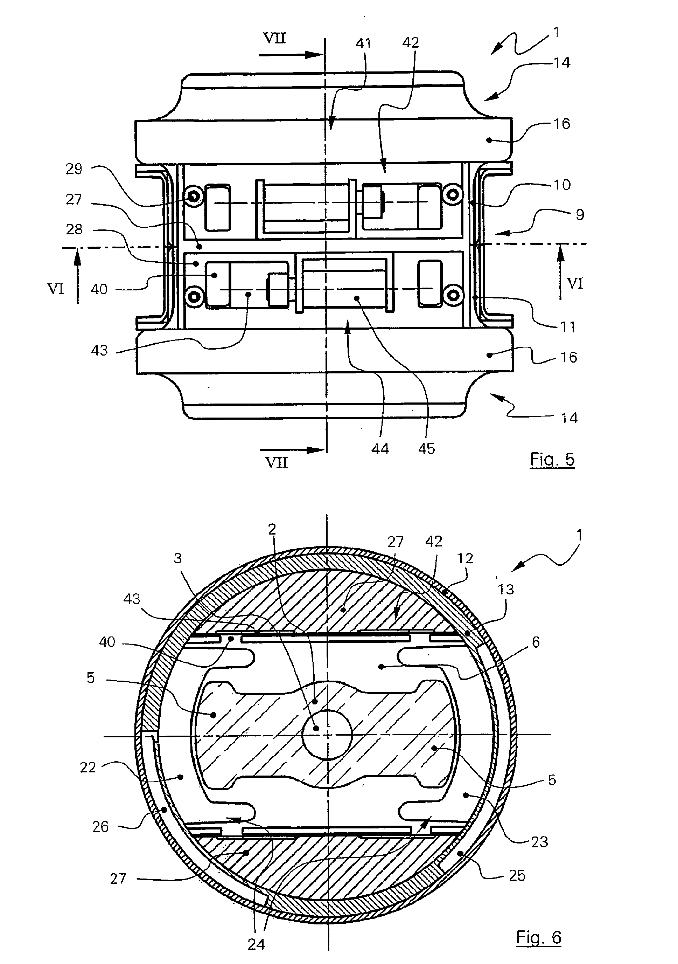

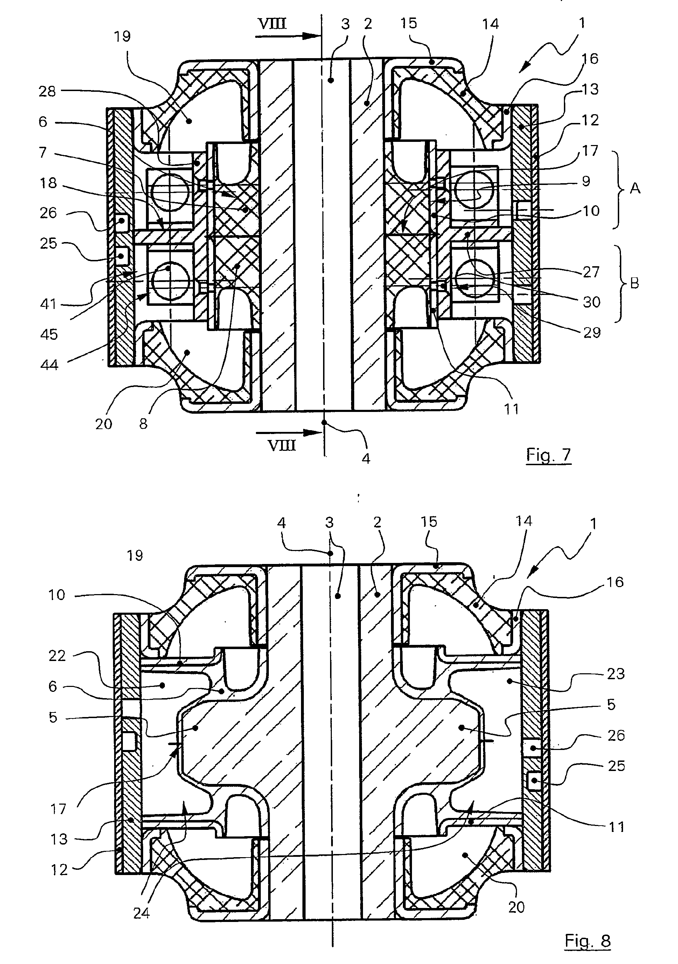

Die in den Fig. 5 bis 8 dargestellte Ausführungsform unterscheidet sich gegenüber der bisher beschriebenen Ausführung lediglich dadurch, dass der Steg 18, welcher in dem ersten Ausführungsbeispiel zweiteilig ausgebildet war, durch ein Zusatzelement 27 ersetzt worden ist. Das Zusatzelement 27 ist auf beiden Seiten des Buchsenlagers 1 kreissegmentförmig ausgebildet und weist eine zu der Trennebene 17 senkrecht stehende Befestigungsplatte 28 auf. Das Zusatzelement 27 ist über eine Verschraubung 29 mit in der Befestigungsplatte 28 angeordneten Bohrungen 30 an der Außenhülse 9 befestigt. Zusatzelement 27 und Befestigungsplatte 28 sind vorzugsweise einstückig ausgebildet. Alternativ zu der Verschraubung 29 kann das Zusatzelement 27 auch mittels weiterer Verbindungsarten an der Außenhülse 9 befestigt werden, beispielsweise mittels einer Clipsverbindung oder einer Nietverbindung.

Mittels des Zusatzelementes 27 wird eine sichere Fixierung der beiden Außenhülsenteile 10, 11 zueinander geschaffen, um die Vorspannung im elastomeren Dämpfungsglied 6 jederzeit gewährleisten zu können. Zudem vereinfacht sich dadurch die Montage, was zu einer weiteren Reduzierung des Fertigungsaufwandes führt.

Der Einsatz eines Zusatzelementes 27 ermöglicht zudem eine Kosten und Fertigungsaufwand minimierende Modulbauweise, indem an dem Zusatzelement 27 der vollständige, aus Verschlußelement 42 und Betätigungsvorrichtung 44 mitsamt der Energiezuführung bestehende, Schließmechanismus 41 angeordnet wird. In der Befestigungsplatte 29 ist hierzu eine den Kammerwandbruch 40 abdeckende Ausnehmung 46 vorgesehen, die wahlweise von einem Schieber 43 verschlossen oder freigegeben wird. Die Energiezuführung kann beispielsweise als eine Kabelführung oder ein das elastomere Dämpfungsglied durchstoßender Steckeranschluß ausgebildet sein.

Das Buchsenlager 1 ist sowohl radial als axial zur Längsachse 4 symmetrisch aufgebaut. Dabei sind alle wesentlichen Bauteile wie das Innenteil 2, das elastomere Dämpfungsglied 6, die Außenhülse 9, die Gummilager 14 sowie die Außenbuchse 12 symmetrisch ausgebildet. Lediglich der Kanalträger 13 weist auf Grund der Ausbildung der Dämpfungskanäle 25, 26 keine vollkommene Symmetrie auf. Die Symmetrie des Buchsenlagers 1 ermöglicht dabeieine gleichmäßige Dämpfungswirkung zumindest in zwei Raumrichtungen. Zudem ergeben sich durch die Symmetrie konstruktive und fertigungstechnische Vorteile, die den Herstellungsaufwand des Buchsenlagers 1 senken.

Der Aufbau des Buchsenlagers 1 ermöglicht zudem die Umsetzung eines Baukastensystems, da alle wesentlichen Bauteile durch gleichartige Bauteile mit anderen Eigenschaften ersetzt werden können. So ist beispielsweise der Kanalträger 13 auf einfache Weise austauschbar gegen einen Kanalträger 13 mit geänderten Dämpfungskanälen 25, 26. Auf die gleiche Weise kann auch das Gummilager 14 getauscht werden oder ein anderes Innenteil 2 verwendet werden. Insbesondere durch den Einsatz unterschiedlicher Innenteile 2, elastomerer Dämpfungsglieder 6 und/oder Gummilager 14sowie unterschiedlicher Außenhülsen 9 kann das Volumen und die Nachgiebigkeiten der axial und radial wirkenden Kammern 19, 20, 22 und 23 eingestellt werden, um unterschiedliche Lager mit unterschiedlichen Dämpfungseigenschaften zu schaffen.

### Bezugszeichenliste

- **1**: Buchsenlager
- **2**: Innenteil
- **3**: Bohrung
- **4**: Längsachse
- **5**: Vorsprung
- **6**: Elastomers Dämpfungsglied
- **7**: oberes Dämpfungsteil
- **8**: unteres Dämpfungsteil
- **9**: Außenhülse
- **10**: oberes Außenhülsenteil
- **11**: unters Außenhülsenteil
- **12**: Außenbuchse
- **13**: Kanalträger
- **14**: Gummilager
- **15**: innerer Stützring
- **16**: äußerer Stützring
- **17**: Trennebene
- **17'**: Kontaktzone
- **18**: Steg
- **19**: obere Kammer
- **20**: untere Kammer
- **21**: erstes Kammerpaar
- **22**: radiale Kammer
- **23**: radiale Kammer
- **24**: zweites Kammerpaar
- **25**: Erster Dämpfungskanal
- **26**: Zweiter Dämpfungskanal
- **27**: Zusatzelement
- **28**: Befestigungsplatte
- **29**: Verschraubung
- **30**: Bohrung
- **40**: Kammerwanddurchbruch
- **41**: Schließmechanismus
- **42**: Verschlußelement
- **43**: Schieber
- **44**: Betätigungsvorrichtung
- **45**: Elektromagnet
- **46**: Ausnehmung
- **A**: Teilbereich
- **B**: Teilbereich

## Patentansprüche

1. Hydraulisch dämpfendes Buchsenlager (1), aufweisend:
- ein Innenteil (2) mit einer entlang einer Längsachse (4) verlaufenden Bohrung (4),
- eine das Innenteil (2) umgebende Außenhülse (9),
- ein zwischen dem Innenteil (2) und der Außenhülse (9) angeordnetes elastomeres Dämpfungsglied (6)
- zumindest zwei Kammerpaare (21, 24) mit jeweils zwei getrennten und mit einem hydraulischen Fluid gefüllten Kammern (19, 20; 22, 23), wobei
- die zwei Kammern (19, 20) eines ersten Kammerpaares (21) axial entlang der Längsachse (4) angeordnet sind
- die zwei Kammern (22, 23) eines zweiten Kammernpaares (24) radial zur Längsachse (4) angeordnet sind und in axialer Richtung der Längsachse (4) zwischen den zwei Kammern (19; 20) des ersten Kammerpaares (21) angeordnet sind
- einen Kanalträger (13), welcher die jeweils zwei Kammern (19, 20; 22, 23) eines der Kammerpaare (21, 24) über jeweils zumindest einen im oder am Kanalträger (13) angeordneten Dämpfungskanal (25, 26) miteinander verbindet
- eine Außenbuchse (12), welche das Innenteil (2), das elastomere Dämpfungsglied (6), die Außenhülse (9), den Kanalträger (13) sowie die zumindest zwei Kammerpaare (21, 24) umschließt
**dadurch gekennzeichnet, dass**
- zumindest eine der Kammern (19, 20) des einen Kammerpaares (21) mit zumindest einer der Kammern (22, 23) des zweiten Kammerpaares (24) über zumindest einen verschließbaren Kammerwanddurchbruch (40) verbindbar ist oder
- die Kammern (19, 20; 22, 23) zumindest eines der Kammerpaare (21, 24) über zumindest einen verschließbaren Kammerwanddurchbruch (40) verbindbar sind oder
- zumindest eine der Kammern (19; 20) des ersten Kammerpaares (21) mit zumindest einer der Kammern (22, 23) des zweiten Kammerpaares (24) über zumindest einen verschließbaren Kammerwanddurchbruch (40) verbindbar ist und die Kammern (19, 20; 22, 23) zumindest eines der Kammerpaare (21, 24) über zumindest einen weiteren verschließbaren Kammerwanddurchbruch verbindbar sind.

2. Hydraulisch dämpfendes Buchsenlager nach Anspruch 1,
**dadurch gekennzeichnet, dass**
die Kammern (19, 20) des ersten Kammerpaares (21) und die Kammern (22, 23) des zweiten Kammerpaares (24) sich wenigstens in einem zur Längsachse (4) axialen Teilbereich (A, B) zumindest bereichsweise überdecken.

3. Hydraulisch dämpfendes Buchsenlager nach Anspruch 1,
**dadurch gekennzeichnet, dass**
der zumindest eine verschließbare Kammerwanddurchbruch (40) mit einem Schließmechanismus (41) wahlweise verschließbar ist.

4. Hydraulisch dämpfendes Buchsenlager nach Anspruch 3,
**dadurch gekennzeichnet, dass**
der Schließmechanismus (41) jeweils von zumindest einem Verschlußelement (42) mit einer das zumindest eine Verschlußelement (42) betätigenden Betätigungsvorrichtung (44) gebildet wird.

5. Hydraulisch dämpfendes Buchsenlager nach Anspruch 4,
**dadurch gekennzeichnet, dass**
das Verschlusselement (42) als ein Schieber (43) ausgebildet ist.

6. Hydraulisch dämpfendes Buchsenlager nach Anspruch 4,
**dadurch gekennzeichnet, dass**
die Betätigungsvorrichtung (44) als ein Elektromagnet (45) ausgebildet.

7. Hydraulisch dämpfendes Buchsenlager nach Anspruch 4,
**dadurch gekennzeichnet, dass**
die Betätigungsvorrichtung (44) pneumatisch, hydraulisch oder mechanisch ausgebildet ist.

8. Hydraulisch dämpfendes Buchsenlager nach Anspruch 4,
**dadurch gekennzeichnet, dass**
die Betätigungsvorrichtung (44) innerhalb einer mit einem Fluid gefüllten Kammer angeordnet ist.

9. Hydraulisch dämpfendes Buchsenlager nach Anspruch 5,
**dadurch gekennzeichnet, dass**
mittels einer Betätigungsvorrichtung (44) zumindest zwei Schieber (43) betätigbar sind.

10. Hydraulisch dämpfendes Buchsenlager nach Anspruch 4,
**dadurch gekennzeichnet, dass**
die Betätigungsvorrichtungen (44) einzeln, paarweise oder in Gruppen ansteuerbar sind.

11. Hydraulisch dämpfendes Buchsenlager nach einem der vorherigen Ansprüche,
**dadurch gekennzeichnet, dass**
der Kanalträger (13) zwischen der Außenhülse (9) und der Außenbuchse (12) angeordnet ist.

12. Hydraulisch dämpfendes Buchsenlager nach Anspruch 11,
**dadurch gekennzeichnet, dass**
der Kanalträger (13) zylindrisch ausgebildet ist und sich im wesentlichen über die gesamte zur Längsachse (4) axialen Ausdehnung der Außenbuchse (12) erstreckt.

13. Hydraulisch dämpfendes Buchsenlager nach einem der vorherigen Ansprüche,
**dadurch gekennzeichnet, dass**
die jeweils zwei Kammern (19, 20; 22, 23) der Kammerpaare (21, 24) zueinander symmetrisch ausgebildet und angeordnet sind.

14. Hydraulisch dämpfendes Buchsenlager nach einem der vorherigen Ansprüche,
**dadurch gekennzeichnet, dass**
die Außenhülse (9) in wenigstens einem Teilbereich (A, B) einen Abstand zu der Außenbuchse (12) oder zu dem Kanalträger (13) aufweist.

15. Hydraulisch dämpfendes Buchsenlager nach Anspruch 14,
**dadurch gekennzeichnet, dass**
die Außenhülse (9) im Bereich des von der Außenbuchse (12) beabstandeten Teilbereichs mit der Außenbuchse (12) oder dem Kanalträger (13) über wenigstens einen Steg (18) miteinander in Kontakt sind, wobei der Steg (18) die Kammern (19, 20) des ersten Kammerpaares (21) voneinandertrennt.

16. Hydraulisch dämpfendes Buchsenlager nach einem der vorherigen Ansprüche,
**dadurch gekennzeichnet, dass**
die Außenhülse (9) zweiteilig aus zwei Außenhülsenteilen (10, 11) gebildet ist.

17. Hydraulisch dämpfendes Buchsenlager nach Anspruch 16,
**dadurch gekennzeichnet, dass**
die beiden Teile der Außenhülse (10, 11) symmetrisch zueinander ausgebildet sind.

18. Hydraulisch dämpfendes Buchsenlager nach einem der vorherigen Ansprüche,
**dadurch gekennzeichnet, dass**
das Innenteil (2) zwei sich in radialer Richtung gegenüberliegende Vorsprünge (5) aufweist, welche in Richtung der Kammern (22, 23) des zweiten Kammerpaares (24) ausgerichtet sind.

19. Hydraulisch dämpfendes Buchsenlager nach einem der vorherigen Ansprüche,
**dadurch gekennzeichnet, dass**
das elastomere Dämpfungsglied (6) zweiteilig aus zwei elastomeren Teilbereichen (7, 8) gebildet ist, wobei der Kontaktbereich der elastomeren Teilbereiche (7, 8) als eine Trennungsebene (17) ausgebildet ist.

20. Hydraulisch dämpfendes Buchsenlager nach Anspruch 16 und 19,
**dadurch gekennzeichnet, dass**
die beiden Außenhülsenteile (10; 11) eine Kontaktzone (17') ausbilden, welche sich mit der Trennungsebene (17) der elastomeren Teilbereichen (7, 8) in einer gemeinsamen Ebene befindet.

21. Hydraulisch dämpfendes Buchsenlager nach einem der vorherigen Ansprüche,
**dadurch gekennzeichnet, dass**
die Außenhülse (9) zumindest in Teilbereichen eine feste Trennwand zwischen einer Kammer (19, 20) des ersten Kammerpaares (21) und einer Kammer (22, 23) des zweiten Kammerpaares (24) bildet.

22. Hydraulisch dämpfendes Buchsenlager nach Anspruch 15, 16, 19 oder 20,
**dadurch gekennzeichnet, dass**
der jeweilige Steg (18) als ein Zusatzelement (27) ausgebildet ist, welches die beiden Außenhülsenteile (10, 11) miteinander verbindet.

23. Hydraulisch dämpfendes Buchsenlager nach Anspruch 22,
**dadurch gekennzeichnet, dass**
das Zusatzelement (27) jeweils über eine kraft- oder formschlüssige Verbindung (29) mit der Außenhülse (9) oder den beiden Außenhülsenteilen (10, 11) verbunden ist.

24. Hydraulisch dämpfendes Buchsenlager nach Anspruch 23,
**dadurch gekennzeichnet, dass**
die kraft- oder formschlüssige Verbindung als eine Verschraubung (29 ausgebildet ist.

25. Hydraulisch dämpfendes Buchsenlager nach Anspruch 22,
**dadurch gekennzeichnet, dass**
das Zusatzelement (27) mit der Betätigungsvorrichtung (44) und dem Verschlußelement (42) ein vormontierbares Modul bildet.

## Claims

1. Hydraulically damping bush bearing (1), comprising:
- an inner part (2) having a bore (4) that extends along a longitudinal axis (4),
- an outer sleeve (9) surrounding the inner part (2),
- an elastomer damping element (6) disposed between the inner part (2) and the outer sleeve (9)
- at least two chamber pairs (21, 24) each comprising two separate chambers (19, 20; 22, 23) filled with a hydraulic fluid, wherein
- the two chambers (19, 20) of a first chamber pair (21) are disposed axially along the longitudinal axis (4)
- the two chambers (22, 23) of a second chamber pair (24) are disposed radially relative to the longitudinal axis (4) and arranged in axial direction of the longitudinal axis (4) between the two chambers (19; 20) of the first chamber pair (21)
- a channel carrier (13), which connects the in each case two chambers (19, 20; 22, 23) of one of the chamber pairs (21, 24) by in each case at least one damping channel (25, 26) disposed in or on the channel carrier (13)
- an outer bush (12), which surrounds the inner part (2), the elastomer damping element (6), the outer sleeve (9), the channel carrier (13) as well as the at least two chamber pairs (21, 24)
**characterized in that**
- at least one of the chambers (19, 20) of the one chamber pair (21) is connectable to at least one of the chambers (22, 23) of the second chamber pair (24) by means of at least one closable chamber wall opening (40) or
- the chambers (19, 20; 22, 23) of at least one of the chamber pairs (21, 24) are connectable by means of at least one closable chamber wall opening (40) or
- at least one of the chambers (19; 20) of the first chamber pair (21) is connectable to at least one of the chambers (22, 23) of the second chamber pair (24) by means of at least one closable chamber wall opening (40) and the chambers (19, 20; 22, 23) of at least one of the chamber pairs (21, 24) are connectable by means of at least one further closable chamber wall.

2. Hydraulically damping bush bearing according to claim 1,
**characterized in that**
the chambers (19, 20) of the first chamber pair (21) and the chambers (22, 23) of the second chamber pair (24) at least in sections mutually overlap at least in an, in relation to the longitudinal axis (4) axial, sub-region (A, B).

3. Hydraulically damping bush bearing according to claim 1,
**characterized in that**
the at least one closable chamber wall opening (40) is selectively closable by means of a closing mechanism (41).

4. Hydraulically damping bush bearing according to claim 3,
**characterized in that**
the closing mechanism (41) is formed in each case by at least one closure element (42) having an actuating device (44) that actuates the at least one closure element (42).

5. Hydraulically damping bush bearing according to claim 4,
**characterized in that**
the closure element (42) takes the form of a slide valve (43).

6. Hydraulically damping bush bearing according to claim 4,
**characterized in that**
the actuating device (44) takes the form of an electromagnet (45).

7. Hydraulically damping bush bearing according to claim 4,
**characterized in that**
the actuating device (44) is of a pneumatic, hydraulic or mechanical design.

8. Hydraulically damping bush bearing according to claim 4,
**characterized in that**
the actuating device (44) is disposed inside a chamber that is filled with a fluid.

9. Hydraulically damping bush bearing according to claim 5,
**characterized in that**
by means of an actuating device (44) at least two slide valves (43) are actuable.

10. Hydraulically damping bush bearing according to claim 4,
**characterized in that**
the actuating devices (44) are controllable individually, in pairs or in groups.

11. Hydraulically damping bush bearing according to one of the preceding claims,
**characterized in that**
the channel carrier (13) is disposed between the outer sleeve (9) and the outer bush (12).

12. Hydraulically damping bush bearing according to claim 11,
**characterized in that**
the channel carrier (13) is of a cylindrical design and extends substantially over the entire, in relation to the longitudinal axis (4) axial, extent of the outer bush (12).

13. Hydraulically damping bush bearing according to one of the preceding claims,
**characterized in that**
the in each case two chambers (19, 20; 22, 23) of the chamber pairs (21, 24) are designed and disposed symmetrically relative to one another.

14. Hydraulically damping bush bearing according to one of the preceding claims,
**characterized in that**
the outer sleeve (9) in at least one sub-region (A, B) has a spacing relative to the outer bush (12) or the channel carrier (13).

15. Hydraulically damping bush bearing according to claim 14,
**characterized in that**
the outer sleeve (9) in the region of the sub-region spaced apart from the outer bush (12) are in contact with one another with the outer bush (12) or the channel carrier (13) by means of at least one web (18), wherein the web (18) separates the chambers (19, 20) of the first chamber pair (21) from one another.

16. Hydraulically damping bush bearing according to one of the preceding claims,
**characterized in that**
the outer sleeve (9) is formed in two parts from two outer sleeve parts (10, 11).

17. Hydraulically damping bush bearing according to claim 16,
**characterized in that**
the two parts of the outer sleeve (10, 11) are designed symmetrically relative to one another.

18. Hydraulically damping bush bearing according to one of the preceding claims,
**characterized in that**
the inner part (2) has two projections (5), which lie opposite one another in radial direction and are oriented in the direction of the chambers (22, 23) of the second chamber pair (24).

19. Hydraulically damping bush bearing according to one of the preceding claims,
**characterized in that**
the elastomer damping element (6) is formed in two parts from two elastomer sub-regions (7, 8), wherein the contact region of the elastomer sub-regions (7, 8) takes the form of a parting plane (17).

20. Hydraulically damping bush bearing according to claim 16 and 19,
**characterized in that**
the two outer sleeve parts (10; 11) form a contact zone (17') that is situated in a common plane with the parting plane (17) of the elastomer sub-regions (7, 8).

21. Hydraulically damping bush bearing according to one of the preceding claims,
**characterized in that**
the outer sleeve (9) at least in sub-regions forms a fixed dividing wall between a chamber (19, 20) of the first chamber pair (21) and a chamber (22, 23) of the second chamber pair (24).

22. Hydraulically damping bush bearing according to claim 15, 16, 19 or 20,
**characterized in that**
the respective web (18) takes the form of an additional element (27) that connects the two outer sleeve parts (10, 11) to one another.

23. Hydraulically damping bush bearing according to claim 22,
**characterized in that**
the additional element (27) is connected in each case by a non-positive or positive connection (29) to the outer sleeve (9) or the two outer sleeve parts (10, 11).

24. Hydraulically damping bush bearing according to claim 23,
**characterized in that**
the non-positive or positive connection takes the form of a screw connection (29).

25. Hydraulically damping bush bearing according to claim 22,
**characterized in that**
the additional element (27) with the actuating device (44) and the closure element (42) forms a module that may be preassembled.

## Revendications

1. Palier à douille (1) assurant un amortissement hydraulique présentant :
- un élément intérieur (2) avec un perçage (4) s'étendant le long d'un axe longitudinal (4),
- un manchon extérieur (9) entourant l'élément intérieur (2),
- un organe d'amortissement (6) en élastomère disposé entre l'élément intérieur (2) et le manchon extérieur (9),
- au moins deux paires de chambres (21, 24) avec respectivement deux chambres (19, 20 ; 22, 23) séparées et remplies d'un fluide hydraulique,
- les deux chambres (19, 20) d'une première paire de chambres (21) étant disposées axialement le long de l'axe longitudinal (4),
- les deux chambres (22, 23) d'une seconde paire de chambres (24) étant disposées radialement par rapport à l'axe longitudinal (4) et dans le sens axial de l'axe longitudinal (4) entre les deux chambres (19 ; 20) de la première paire de chambres (21),
- un support de canal (13) qui relie entre elles les respectivement deux chambres (19, 20 ; 22, 23) de l'une des paires de chambres (21, 24) par respectivement au moins un canal d'amortissement (25, 26) disposé dans ou sur le support de canal (13),
- une douille extérieure (12) qui entoure l'élément intérieur (2), l'organe d'amortissement (6) en élastomère, le manchon extérieur (9), le support de canal (13) ainsi que les au moins deux paires de chambres (21, 24),
**caractérisé en ce que**
- au moins l'une des chambres (19, 20) d'une paire de chambres (21) peut être reliée à au moins l'une des chambres (22, 23) de la seconde paire de chambres (24) par au moins un percement de paroi de chambre (40) pouvant être fermé ou
- les chambres (19, 20 ; 22, 23) d'au moins l'une des paires de chambres (21, 24) peuvent être reliées par au moins un percement de paroi de chambre (40) pouvant être fermé ou
- au moins l'une des chambres (19 ; 20) de la première paire de chambres (21) peut être reliée à au moins l'une des chambres (22, 23) de la seconde paire de chambres (24) par au moins un percement de paroi de chambre (40) pouvant être fermé et les chambres (19, 20 ; 22, 23) d'au moins l'une des paires de chambres (21, 24) peuvent être reliées par au moins un autre percement de paroi de chambre pouvant être fermé.

2. Palier à douille assurant un amortissement hydraulique selon la revendication 1,
**caractérisé en ce que**
les chambres (19, 20) de la première paire de chambres (21) et les chambres (22, 23) de la seconde paire de chambres (24) se recouvrent au moins par endroits au moins dans une zone partielle (A, B) axiale par rapport à l'axe longitudinal (4).

3. Palier à douille assurant un amortissement hydraulique selon la revendication 1,
**caractérisé en ce que**
l'au moins un percement de paroi de chambre (40) pouvant être fermé peut être fermé au choix avec un mécanisme de fermeture (41).

4. Palier à douille assurant un amortissement hydraulique selon la revendication 3,
**caractérisé en ce que**
le mécanisme de fermeture (41) est formé respectivement par au moins un élément de fermeture (42) avec un dispositif d'actionnement (44) actionnant l'au moins un élément de fermeture (42).

5. Palier à douille assurant un amortissement hydraulique selon la revendication 4,
**caractérisé en ce que**
l'élément de fermeture (42) est réalisé comme un tiroir (43).

6. Palier à douille assurant un amortissement hydraulique selon la revendication 4,
**caractérisé en ce que**
le dispositif d'actionnement (44) est réalisé comme un électroaimant (45).

7. Palier à douille assurant un amortissement hydraulique selon la revendication 4,
**caractérisé en ce que**
le dispositif d'actionnement (44) est réalisé pneumatiquement, hydrauliquement ou mécaniquement.

8. Palier à douille assurant un amortissement hydraulique selon la revendication 4,
**caractérisé en ce que**
le dispositif d'actionnement (44) est disposé dans une chambre remplie d'un fluide.

9. Palier à douille assurant un amortissement hydraulique selon la revendication 5,
**caractérisé en ce que**
au moins deux tiroirs (43) peuvent être actionnés au moyen d'un dispositif d'actionnement (44).

10. Palier à douille assurant un amortissement hydraulique selon la revendication 4,
**caractérisé en ce que**
les dispositifs d'actionnement (44) peuvent être commandés individuellement, par paires ou en groupes.

11. Palier à douille assurant un amortissement hydraulique selon l'une quelconque des revendications précédentes,
**caractérisé en ce que**
le support de canal (13) est disposé entre le manchon extérieur (9) et la douille extérieure (12).

12. Palier à douille assurant un amortissement hydraulique selon la revendication 11,
**caractérisé en ce que**
le support de canal (13) est réalisé cylindrique et s'étend essentiellement sur tout le développement axial par rapport à l'axe longitudinal (4) de la douille extérieure (12).

13. Palier à douille assurant un amortissement hydraulique selon l'une quelconque des revendications précédentes,
**caractérisé en ce que**
les respectivement deux chambres (19, 20 ; 22, 23) des paires de chambres (21, 24) sont réalisées et disposées symétriques l'une par rapport à l'autre.

14. Palier à douille assurant un amortissement hydraulique selon l'une quelconque des revendications précédentes,
**caractérisé en ce que**
le manchon extérieur (9) présente dans au moins une zone partielle (A, B) une distance par rapport à la douille extérieure (12) ou par rapport au support de canal (13).

15. Palier à douille assurant un amortissement hydraulique selon la revendication 14,
**caractérisé en ce que**
les manchons extérieurs (9) sont en contact entre eux dans la zone de la zone partielle espacée de la douille extérieure (12) avec la douille extérieure (12) ou le support de canal (13) par au moins une branche (18), la branche (18) séparant les chambres (19, 20) de la première paire de chambres (21) l'une de l'autre.

16. Palier à douille assurant un amortissement hydraulique selon l'une quelconque des revendications précédentes,
**caractérisé en ce que**
le manchon extérieur (9) est formé de deux parties composées de deux éléments de manchon extérieur (10, 11).

17. Palier à douille assurant un amortissement hydraulique selon la revendication 16,
**caractérisé en ce que**
les deux éléments du manchon extérieur (10, 11) sont réalisés symétriques l'un par rapport à l'autre.

18. Palier à douille assurant un amortissement hydraulique selon l'une quelconque des revendications précédentes,
**caractérisé en ce que**
l'élément intérieur (2) présente deux saillies (5) opposées dans le sens radial, lesquelles sont orientées en direction des chambres (22, 23) de la seconde paire de chambres (24).

19. Palier à douille assurant un amortissement hydraulique selon l'une quelconque des revendications précédentes,
**caractérisé en ce que**
l'organe d'amortissement (6) en élastomère est formé de deux parties composées de deux zones partielles (7, 8) en élastomère, la zone de contact des zones partielles (7, 8) en élastomère étant réalisée comme un plan de séparation (17).

20. Palier à douille assurant un amortissement hydraulique selon la revendication 16 et 19,
**caractérisé en ce que**
les deux éléments de manchon extérieur (10 ; 11) réalisent une zone de contact (17') qui se trouve avec le plan de séparation (17) des zones partielles (7, 8) en élastomère dans un plan commun.

21. Palier à douille assurant un amortissement hydraulique selon l'une quelconque des revendications précédentes,
**caractérisé en ce que**
le manchon extérieur (9) forme au moins dans des zones partielles une paroi de séparation fixe entre une chambre (19, 20) de la première paire de chambres (21) et une chambre (22, 23) de la seconde paire de chambres (24).

22. Palier à douille assurant un amortissement hydraulique selon la revendication 15, 16, 19 ou 20,
**caractérisé en ce que**
la branche (18) respective est réalisée comme un élément supplémentaire (27) qui relie entre eux les deux éléments de manchon extérieur (10, 11).

23. Palier à douille assurant un amortissement hydraulique selon la revendication 22,
**caractérisé en ce que**
l'élément supplémentaire (27) est relié respectivement par une liaison à force ou positive au manchon extérieur (9) ou aux deux éléments de manchon extérieur (10, 11).

24. Palier à douille assurant un amortissement hydraulique selon la revendication 23,
**caractérisé en ce que**
la liaison à force ou positive est réalisée comme un vissage (29).

25. Palier à douille assurant un amortissement hydraulique selon la revendication 22,
**caractérisé en ce que**
l'élément supplémentaire (27) forme avec le dispositif d'actionnement (44) et l'élément de fermeture (42) un module pouvant être préassemblé.
